# EUROPÄISCHE PATENTSCHRIFT

(11) **EP 3 835 122 B1**
(45) Veröffentlichungstag und Bekanntmachung des Hinweises auf die Patenterteilung: **23.11.2022**
(21) Anmeldenummer: 20000445.5
(22) Anmeldetag: 09.12.2020
(51) Int. Cl.: B60N 2/39, B60N 2/50, B60N 2/52

(54) **FAHRZEUGSITZ MIT EINER FEDEREINHEIT ZUM FEDERN VON WANK- UND VERTIKALFEDERBEWEGUNG**
VEHICLE SEAT WITH A SPRING UNIT FOR SUSPENDING ROLL AND VERTICAL MOVEMENT
SIÈGE DE VÉHICULE DOTÉ D'UNE UNITÉ DE RESSORT PERMETTANT DE FAIRE RESSORT DU MOUVEMENT DE ROULIS ET DE RESSORT VERTICAL

(30) Priorität: 13.12.2019 DE 102019134237
(43) Veröffentlichungstag der Anmeldung: 16.06.2021
(73) Patentinhaber: GRAMMER AG, 92289 Ursensollen (DE)
(72) Erfinder: Dotzler, Florian, 92242 Hirschau (DE); Krivenkov, Konstantin, 92224 Amberg (DE)
(74) Vertreter: Hannke Bittner & Partner

(56) Entgegenhaltungen:
- EP-A2- 2 463 146
- JP-A- H03 220 031

## Beschreibung

Die Erfindung betrifft einen Fahrzeugsitz mit einer Federeinheit zum Federn von Wank- und Vertikalbewegungen des Fahrzeugsitzes, wobei der Fahrzeugsitz ein Fahrzeugsitzoberteil und ein Fahrzeugsitzunterteil aufweist, wobei das Fahrzeugsitzoberteil und das Fahrzeugsitzunterteil mittels der Federeinheit verbunden sind, sodass das Fahrzeugsitzoberteil und das Fahrzeugsitzunterteil relativ zueinander bewegbar sind, wobei die Federeinheit eine Scherenanordnung mit einem ersten Scherenarm und einem zweiten Scherenarm aufweist. Fahrzeugsitze mit Wank- und Vertikalfederungen sind auf dem Stand der Technik bekannt, beispielsweise ist aus der WO 2014/176130 A eine Wankfederung bekannt, welche Wankbewegungen des Fahrzeugs beziehungsweise des Fahrzeugsitzes abfedern kann. Eine derartige Wankbewegung, wie im Stand der Technik dargestellt, ist jedoch konstruktiv sehr aufwendig und erfordert viele aktiv gesteuerte Komponenten und ist auch sehr platzintensiv. Die EP 246146 zeigt einen Fahrzeugsitz mit einer Einrichtung zum Ausgleich der Wankbewegung des Fahrzeugs und mit einer Federeinheit zum Federn der Vertikalbewegung des Fahrzeugsitzes.

Es ist daher Aufgabe der vorliegenden Erfindung, einen Fahrzeugsitz mit einer Federeinheit zum Federn von Wank- und Vertikalbewegungen bereitzustellen, welche konstruktiv einfacher als im Stand der Technik dargestellt ausgebildet ist.

Die zugrundeliegende Aufgabe der vorliegenden Anmeldung wir durch einen Fahrzeugsitz mit den Merkmalen des Patentanspruches 1 gelöst.

Kerngedanke der vorliegenden Erfindung ist es, einen Fahrzeugsitz mit einer Federeinheit zum Federn von Wank- und Vertikalbewegungen des Fahrzeugsitzes bereitzustellen, wobei der Fahrzeugsitz ein Fahrzeugsitzoberteil und ein Fahrzeugsitzunterteil aufweist, wobei das Fahrzeugsitzoberteil und das Fahrzeugsitzunterteil mittels der Federeinheit verbunden sind, so dass das Fahrzeugsitzoberteil und das Fahrzeugsitzunterteil relativ zueinander bewegbar sind, wobei die Federeinheit eine Scherenanordnung mit einem ersten Scherenarm und einem zweiten Scherenarm aufweist, wobei die Federeinheit drehbar um eine erste Drehachse mit dem Fahrzeugsitzunterteil verbunden ist und einen Federelementträger und ein erstes Fluidfederelement und ein zweites Fluidfederelement umfasst, wobei das erste Fluidfederelement und das zweite Fluidfederelement jeweils mit dem Fahrzeugsitzunterteil und mit dem Federelementträger verbunden ist, welcher drehbar um eine zweite Drehachse mit dem ersten Scherenarm und drehbar um eine dritte Drehachse mit dem zweiten Scherenarm verbunden ist, und wobei mittels einer Pumpeinheit ein Fluid zwischen dem ersten Fluidfederelement und dem zweiten Fluidfederelement umpumpbar ist, so dass das Fahrzeugsitzoberteil im Wesentlichen in einer waagerechten Stellung ist.

Alternativ wird die Aufgabe gelöst durch einen Fahrzeugsitz mit einer Federeinheit zum Federn von Wank- und Vertikalbewegungen des Fahrzeugsitzes, wobei der Fahrzeugsitz ein Fahrzeugsitzoberteil und ein Fahrzeugsitzunterteil aufweist, wobei das Fahrzeugsitzoberteil und das Fahrzeugsitzunterteil mittels der Federeinheit verbunden sind, so dass das Fahrzeugsitzoberteil und das Fahrzeugsitzunterteil relativ zueinander bewegbar sind, wobei die Federeinheit eine Scherenanordnung mit einem ersten Scherenarm und einem zweiten Scherenarm aufweist, wobei die Federeinheit drehbar um eine erste Drehachse mit dem Fahrzeugsitzunterteil verbunden ist und einen Federelementträger und ein erstes Fluidfederelement und ein zweites Fluidfederelement umfasst, wobei das erste Fluidfederelement und das zweite Fluidfederelement jeweils mit dem Fahrzeugsitzunterteil und mit dem Fahrzeugsitzoberteil verbunden sind, welcher drehbar um eine zweite Drehachse mit dem ersten Scherenarm und drehbar um eine dritte Drehachse mit dem zweiten Scherenarm verbunden ist, und wobei mittels einer Pumpeinheit ein Fluid zwischen dem ersten Fluidfederelement und dem zweiten Fluidfederelement umpumpbar ist, so dass das Fahrzeugsitzoberteil im Wesentlichen in einer waagerechten Stellung ist.

Unter einer Wankbewegung ist hierbei eine Rotationsbewegung des Fahrzeugsitzes um eine Drehachse, welche in Fahrzeugsitzlängsrichtung verlaufend angeordnet ist, gemeint.

Besonders bevorzugt ist daher die erste Drehachse parallel zu der ersten Fahrzeugsitzlängsrichtung angeordnet.

Gemäß einer bevorzugten Ausführungsform ist es auch vorgesehen, dass das Fahrzeugsitzoberteil und das Fahrzeugsitzunterteil mittels der Federeinheit relativ zueinander federbar sind.

Gemäß einer besonders bevorzugten Ausführungsform ist das erste Fluidfederelement das zweite Fluidfederelement bevorzugt eine elastisch deformierbare Luftfeder.

Insbesondere ist das erste Fluidfederelement verlaufend in die Richtung des ersten Winkels und des zweiten Winkels angeordnet, das heißt, dass das erste Fluidfederelement in einem Standardkoordinatensystem gesehen schräg verlaufen angeordnet ist.

Das Standardkoordinatensystem ist dabei gebildet aus der Fahrzeugsitzlängsrichtung, der Fahrzeugsitzbreitenrichtung und der Fahrzeugsitzhöhenrichtung, welche jeweils in einem rechten Winkel zueinander angeordnet sind.

Dadurch, dass gemäß einer Ausführungsform das erste Fluidfederelement mit dem Federelementträger und dem Fahrzeugsitzunterteil verbunden ist, ist zu folgern, dass der erste Winkel und der zweite Winkel abhängig sind von einer Federposition des Fahrzeugsitzes. Durch eine Federbewegung, welche eine Wank- und/oder Vertikalbewegung sein kann, ändert sich die Position des Federelementträgers im Raum, so dass ein erstes Ende des ersten Fluidfederelements ebenso seine Position im Raum verändert, wobei ein zweites Ende des ersten Fluidfederelements, welches mit dem Fahrzeugsitzunterteil verbunden ist, in seiner Position nicht verändert wird. Das heißt insbesondere, dass der erste Winkel und der zweite Winkel nicht konstant sind während einer Federbewegung des Fahrzeugsitzes. In einer Neutralstellung, das heißt, dass der Fahrzeugsitz keiner Federbewegung unterliegt, das heißt, dass es keine Relativbewegung des Fahrzeugsitzoberteils gegenüber dem Fahrzeugsitzunterteil gibt, so ist der erste Winkel und der zweite Winkel konstant.

Je nach Größe des ersten Winkels und des zweiten Winkels ist es möglich, die Federsteifigkeit des ersten Fluidfederelements einzustellen. Die Federsteifigkeit ist insbesondere eine Einstellmöglichkeit für die Vertikal- und für die Wankrichtung für die Federbewegung. Durch Einstellung des ersten Winkels und des zweiten Winkels ist es möglich, die Federsteifigkeit hinsichtlich der Vertikal- und der Wankrichtung beziehungsweise der Wankfederrichtung einzustellen.

Besonders bevorzugt ist vorgesehen, dass sich der erste Scherenarm und der zweite Scherenarm in einem ersten Bereich in Fahrzeugsitzlängsrichtung gesehen kreuzen, wobei es dabei vorgesehen ist, dass zwischen dem ersten Scherenarm und dem zweiten Scherenarm keine bauliche Verbindung vorgesehen ist, mit Ausnahme des Federelementträgers. Das bedeutet insbesondere, dass bei einer Bewegung des Fahrzeugsitzoberteils gegenüber dem Fahrzeugsitzunterteil der erste Bereich, welcher den Kreuzungsbereich des ersten Scherenarms mit dem zweiten Scherenarm darstellt, entsprechend der Bewegung des Fahrzeugsitzes nachfolgen muss. Insbesondere ist hierbei zu verstehen, dass es keine gemeinsame Drehachse zwischen dem ersten Scherenarm und dem zweiten Scherenarm gibt.

Es kann vorgesehen sein, dass der erste Scherenarm und der zweite Scherenarm kraftverbunden sind, beispielsweise durch eine Reibungskraft, falls die Scherenarme miteinander in Kontakt stehen.

Durch die zuvor beschriebene Zwangsführung beziehungsweise Zwangsbewegung des Federelementträgers aufgrund der Bewegung des Fahrzeugsitzoberteils relativ zu dem Fahrzeugsitzunterteil wird eine Federkraft des ersten Fluidfederelements bzw. des zweiten Fluidfederelements hervorgerufen, sodass eine Federung des Fahrzeugsitzes durch die Federeinheit hervorgerufen wird.

Gemäß einer alternativen Ausgestaltung kann es sein, dass zwischen dem ersten Scherenarm und dem zweiten Scherenarm eine bauliche Verbindung vorgesehen ist, so dass die Scherenanordnung einem Scherengestell im herkömmlichen Sinne vorliegt, also die Scherenarme miteinander drehbar um eine gemeinsame Drehachse verbunden sind. Der Federelementträger ist in diesem Fall bevorzugt direkt an der gemeinsamen Drehachse befestigt.

Allgemein gesprochen wird bei einer relativen Bewegung des Fahrzeugsitzoberteils gegenüber dem Fahrzeugsitzunterteil in einer vertikalen Richtung, das heißt in Fahrzeugsitzhöhenrichtung, aufgrund einer externen Krafteinwirkung auf dem Fahrzeugsitz durch die drehbare Anordnung des Federelementträgers an dem ersten Scherenarm beziehungsweise dem zweiten Scherenarm eine entsprechende Bewegung des Federelementträgers ausgeführt. Das heißt, dass bei einer vertikalen Auslenkung, also einer Auslenkung in einer Fahrzeugsitzhöhenrichtung, der Federelementträger eine lineare Verlagerung entsprechend dem Fahrzeugsitzoberteil in Fahrzeugsitzhöhenrichtung erfährt. Bei einer Wankbewegung des Fahrzeugsitzes, das heißt bei einer Drehung des Fahrzeugsitzoberteils gegenüber des Fahrzeugsitzunterteil um die erste Drehachse wird der Federelementträger ebenso einer derartigen Wankbewegung unterworfen. Durch die Wankbewegung des Federelementträgers wird das erste Fluidfederelement und das zweite Fluidfederelement deformiert, sodass eine Federkraft hervorgerufen wird, welche der Wankbewegung entgegenwirkt.

Erfindungsgemäß ist es vorgesehen, dass die Federeinheit ein zweites Fluidfederelement umfasst, wobei das zweite Fluidfederelement einerseits mit dem Fahrzeugsitzunterteil und andererseits mit dem Federelementträger verbunden ist und wobei das zweite Fluidfederelement in einem dritten Winkel zu der Fahrzeugsitzbreitenrichtung und in einem vierten Winkel zu der Fahrzeugsitzhöhenrichtung angeordnet ist.

Besonders bevorzugt ist das zweite Fluidfederelement derart angeordnet, dass bezüglich einer Ebene gebildet aus der Fahrzeugsitzlängsrichtung und der Fahrzeugsitzhöhenrichtung das erste Fluidfederelement auf einer ersten Seite der Ebene und das zweite Fluidfederelement auf der zweiten Seite der Ebene angeordnet sind.

Ebenso ist es möglich, dass der erste Winkel dem dritten Winkel entspricht und der zweite Winkel dem vierten Winkel entspricht, sodass das erste Fluidfederelement und das zweite Fluidfederelement hinsichtlich der Ebene gebildet aus Fahrzeugsitzlängsrichtung und Fahrzeugsitzhöhenrichtung symmetrisch zueinander angeordnet sind.

Es ist jedoch ebenso möglich, dass der erste Winkel einen anderen Wert aufweist als der dritte Winkel und dass der zweite Winkel einen anderen Wert als der vierte Winkel aufweist.

Es wird darauf hingewiesen, dass symmetrisch in dem Neutralzustand bzw. der neutralen Stellung zu verstehen ist, das heißt, dass keine externe Kraft auf den Fahrzeugsitz einwirkt. Bei einer Federbewegung des Fahrzeugsitzes ändert sich die Anordnung der Fluidfederelemente zueinander, da insbesondere bei einer Wankbewegung ein Fluidfederelement komprimiert und das andere Fluidfederelement entsprechend dekomprimiert wird, das heißt ein Fluidfederelement wird gestaucht und das andere Fluidfederelement wird in seiner Länge gezogen.

Gemäß einer besonders bevorzugten Ausführungsform ist es vorgesehen, dass der erste Winkel und der zweite Winkel jeweils einen Wert aus einem Bereich ]0; 90°] annehmen können.

Gemäß einer weiteren bevorzugten Ausführungsform ist es vorgesehen, dass der dritte Winkel und der vierte Winkel jeweils einen Wert aus einem Bereich ]0; 90°] annehmen können.

Besonders bevorzugt ist es vorgesehen, dass der erste Winkel, der zweite Winkel, der dritte Winkel und der vierte Winkel nicht den Winkelwert 90° annehmen können, das heißt, dass die Winkel jeweils einen Wert in dem Bereich ]0; 90°[ annehmen können. Das heißt, dass insbesondere in Fahrzeugsitzhöhenrichtung gesehen die Federelemente nicht einer Vertikalfeder entsprechen.

Gemäß einer besonders bevorzugten Ausführungsform ist es vorgesehen, dass das Umpumpen des Fluids derart ist, dass während einer Auslenkung des Fahrzeugsitzes abhängig von der Richtung und der Art der Auslenkung von dem ersten Fluidfederelement zu dem zweiten Fluidfederelement oder umgekehrt umgepumpt wird und das Umpumpen des Fluids während einer neutralen Stellung des Fahrzeugsitzes verhindert ist.

Gemäß einer weiteren bevorzugten Ausführungsform ist es vorgesehen, dass ein Differenzdruckmessgerät vorgesehen ist, welches fluidisch mit dem ersten Fluidfederelement und dem zweiten Fluidfederelement verbunden ist und parallel zu der Pumpeinheit angeordnet ist, wobei das Differenzdruckmessgerät dazu vorgesehen und ausgebildet ist, Druckschwankungen zwischen dem ersten Fluidfederelement und dem zweiten Fluidfederelement zu erfassen.

Insbesondere wird bei Wankbewegungen ein Umpumpen von Fluid zwischen den Fluidfederelementen vorgenommen. Bei keiner Auslenkung des Fahrzeugsitzes oder einer vertikalen Auslenkung des Fahrzeugsitzes ist kein Umpumpen notwendig, da das Fahrzeugsitzoberteil in seiner waagerechten Anordnung verbleibt.

Dabei sind verschiedene Auslenkungen hinsichtlich der Art zu unterscheiden. Eine erste Auslenkung ist denkbar, wenn das Fahrzeug in schräger Position steht oder konstant in schräger Position fährt, beispielsweise beim Pflügen oder dergleichen. Die Pumpeinheit pumpt solange Fluid von dem einen Fluidfederelement zu dem anderen Fluidfederelement um, bis die wirkende Vertikalkraft der einzelnen Fluidfederelemente gleich ist, also das Fahrzeugsitzoberteil in der waagerechten Position gehalten ist. Mittels des Differenzdruckmessgeräts kann vorzugsweise eine Luftmenge ermittelt werden, welche zwischen dem ersten Fluidfederelement und dem zweiten Fluidfederelement umgepumpt werden soll. Durch die allgemeine Beziehung zwischen wirkender Kraft, Druck und (Wirk-) Fläche A kann mittels des Differenzdruckmessgeräts die Druckabweichung bzw. Druckdifferenz erfasst werden und somit die Kraft abgestimmt werden.

Dadurch kann die benötigte Fluidmenge mittels des Differenzdruckmessgeräts bestimmt werden.

Eine zweite Auslenkung ist denkbar, wenn das Fahrzeug sich dynamisch bewegt, das heißt, dass das Fahrzeug einer Schwingung unterliegt, welche sich auch auf den Fahrzeugsitz überträgt. Dabei muss unterschieden werden zwischen einer hochfrequenten und einer niederfrequenten Schwingung.

Bei der niederfrequenten Schwingung wankt das Fahrzeug in einem niedrigen Frequenzbereich. Bevorzugt wird mittels des Differenzdruckmessgeräts Druckschwankungen der Fluidfederelemente festgestellt und entsprechend dieser die Pumpeinheit angesteuert. Voraussetzung hierfür ist natürlich, dass die Pumpeinheit ausgebildet ist, diese Leistung erbringen zu können, also hinsichtlich der Pumpleistung und des Fluiddurchsatzes.

Bei einer hochfrequenten Schwingung mit einer kleinen Amplitude ist der Sachverhalt anders. Das Differenzdruckmessgerät registriert Änderungen des Differenzdrucks, welche unter einem definierbaren Druckniveau liegen. Das Amplitudenverhältnis zwischen der Amplitude der Federung in Wankrichtung und der Auslenkung des Fahrzeugs ist kleiner als 1, so dass sich das schwingende System in einem (über-) kritischen Bereich befindet. Ein Umpumpen mittels der Pumpeinheit ist hierbei unwirtschaftlich und wird deaktiviert bzw. unterbrochen, da eine zu große Pumpe bzw. eine Pumpe mit großer Pumpleistung nötig wäre.

Ein weiterer Sachverhalt ist eine hochfrequente Schwingung mit einer großen Amplitude, das heißt, dass eine schlagartige Änderung des Differenzdrucks über dem definierbaren Druckniveau registriert wird.

Für diesen Fall ist es gemäß einer bevorzugten Ausführungsform vorgesehen, dass ein erstes Ventilelement vorgesehen ist, welches parallel zu der Pumpeinheit angeordnet ist, wobei das Ventilelement geöffnet ist bei einer hochfrequenten Auslenkung mit einer großen Amplitude, und sonst geschlossen ist.

Durch das plötzliche Öffnen des ersten Ventilelements kann ein schlagartiger Druckausgleich zwischen den Fluidfederelementen erfolgen, so dass aufgrund der Massenträgheit des Fahrzeugsitzoberteils seine ursprüngliche Position erhalten werden kann, also die waagerechte Stellung des Fahrzeugsitzoberteils.

Gemäß einer weiteren bevorzugten Ausführungsform ist es vorgesehen, dass ein zweites Ventilelement und ein drittes Ventilelement vorgesehen sind, wobei das zweite Ventilelement mit dem ersten Fluidfederelement und das dritte Ventilelement mit dem zweiten Fluidfederelement fluidisch verbunden ist, wobei das zweite Ventilelement und das dritte Ventilelement parallel zueinander angeordnet sind, und wobei das zweite Ventilelement und das dritte Ventilelement mittels eines vierten Ventilelements mit einer Verdichtereinheit fluidisch verbunden sind, wobei abhängig von einer Schaltstellung des zweiten Ventilelements, des dritten Ventilelements und des vierten Ventilelements ein Fluid in ein Fluidfederelement oder in beide Fluidfederelement oder aus einem oder beiden Fluidfederelementen förderbar ist.

Über die Verdichtereinheit kann das System mit dem Fluid gefüllt werden, so dass damit die Grundhöhe der Federung eingestellt werden kann. Das vierte Ventilelement, welches vorzugsweise als ein 3/2 Wegeventil ausgebildet ist, dient für den Luftauslass und damit für die Einstellung einer tieferen Sitzposition. Damit die Luft weiter zu den Luftfedern strömen kann, müssen das zweite Ventilelement und das dritte Ventilelement zusammen mit der Verdichtereinheit angesteuert werden. Bei Betätigung nur eines dieser Ventile kann ein Fluidfederelement mit mehr Druck beaufschlagt werden als die andere. Dies dient z.B. dem Ausgleich der statischen Auslenkung.

Weiterhin kann mittels der Pumpeinheit das Fluid von dem einen Fluidfederelement in das andere Fluidfederelement gepumpt werden. Dies ist die Ausführung der beschriebenen, aktiven Schwingungsisolation in Wankrichtung. Das erste Ventilelement muss einen wesentlich größeren Durchflussquerschnitt aufweisen als das zweite Ventilelement und das dritte Ventilelement. Damit kann bei Betätigung des vierten Ventilelements ein schneller Druckausgleich zwischen den Fluidfederelementen stattfinden. Dies ist z.B. hilfreich, wenn bei sehr schnellen Bewegungen des Fahrzeugkabinenbodens das Sitzoberteil der Federung seine waagerechte Stellung halten soll. Durch das Öffnen dieser Leitung wird dann keine zusätzliche Kraftkomponente in Auslenkungsrichtung erzeugt.

Für eine kurze Reaktionszeit sollten die Schlauchleitungen möglichst kurz sein. Daher sollte das vierte Ventilelement möglichst nahe zwischen den Fluidfederelementen angeordnet werden.

Gemäß einer weiteren bevorzugten Ausführungsform ist es vorgesehen, dass ein erster Sensor an dem Fahrzeugsitzoberteil und ein zweiter Sensor an dem Fahrzeugsitzunterteil angeordnet sind, wobei mittels des ersten Sensors Abweichungen von der waagerechten Stellung des Fahrzeugsitzoberteils und mittels des zweiten Sensors eine Amplitude und eine Frequenz der Auslenkung des Federungsunterteils oder Kabinenbodens ermittelbar sind.

Bevorzugt handelt es sich bei dem ersten Sensor um einen Winkelsensor.

Gelöst wird die zugrunde liegende Aufgabe auch durch ein Verfahren zum Federn von Wankbewegungen eines Fahrzeugsitzes nach einem der Ansprüche 1 bis 7, umfassend die Verfahrensschritte:
a) Erkennen einer Auslenkung des Fahrzeugsitzes an dem Fahrzeugsitzoberteil und/oder der Auslenkung an dem Fahrzeugsitzunterteil und einer Amplitude und einer Frequenz der Auslenkung an dem Fahrzeugsitzunterteil;
b) Ermitteln einer umzupumpenden Fluidmenge zwischen dem ersten Fluidfederelement und dem zweiten Fluidfederelement, und Umpumpen dieser Fluidmenge, so dass das Fahrzeugsitzoberteil in einer waagerechten Stellung gehalten wird.

Gemäß einer weiteren bevorzugten Ausführungsform ist es vorgesehen, dass die erste Drehachse parallel zu der Fahrzeugsitzlängsrichtung angeordnet ist, und bevorzugt die zweite Drehachse und die dritte Drehachse in Fahrzeugsitzbreitenrichtung verlaufend angeordnet sind und die zweite und die dritte Drehachse parallel zueinander angeordnet sind.

Insbesondere durch die Anordnung der zweiten Drehachse und der dritten Drehachse kann ein Verkanten der Scherenanordnung mit dem Federelementträger verhindert werden, insbesondere bei einer Relativbewegung des Fahrzeugsitzoberteils zu dem Fahrzeugsitzunterteil.

Gemäß einer besonders bevorzugten Ausführungsform ist es vorgesehen, dass die erste Drehachse durch eine Welle definiert ist, welche mit dem Fahrzeugsitzunterteil drehbar verbunden ist. Dabei weist die Welle vorzugsweise ein erstes Ende und ein zweites Ende auf, wobei das erste Ende und das zweite Ende jeweils drehbar mit dem Fahrzeugsitzunterteil verbunden sind. Anstelle einer Welle ist auch ein Stabelement denkbar, wobei die Welle, beziehungsweise das Stabelement zylindrisch oder kantig ausgebildet sein können. Wenn das Stabelement kantig ausgebildet ist, dann ist dieses drehbar mit dem Fahrzeugsitzunterteil verbunden.

Gemäß einer weiteren bevorzugten Ausführungsform ist es vorgesehen, dass der erste Scherenarm mittels eines ersten Loslagers mit dem Fahrzeugsitzoberteil und mittels eines zweiten Loslagers mit der Welle und der zweite Scherenarm mittels eines dritten Loslagers mit dem Fahrzeugsitzoberteil und mittels eines vierten Loslagers mit der Welle verbunden sind. Eine derartige Ausgestaltung ermöglicht zusätzlich eine Nickfederbewegung des Fahrzeugsitzes mittels der Federeinheit.

Gemäß der Ausgestaltung des ersten Scherenarms und des zweiten Scherenarms mittel von vier Loslagern zur Verbindung mit dem Fahrzeugsitzoberteil und dem Fahrzeugsitzunterteil wird erreicht, dass bei einer Nickbewegung des Fahrzeugsitzes und bei einer entsprechenden Nachfolgung des Fahrzeugsitzoberteils gegenüber dem Fahrzeugsitzunterteil eine stärkere Nickbewegung des Fahrzeugsitzes erhalten wird. Dadurch, dass vier Loslager vorgesehen sind, ist die Federeinheit mechanisch unbestimmt, das heißt, es existieren noch Freiheitsgrade, welche nicht hinreichend bestimmt werden können. Um diese Freiheitsgrade weiter zu minimieren, sind entsprechend ein erstes Verbindungselement und ein zweites Verbindungselement vorgesehen, welche durch die entsprechende Anordnung mit dem ersten Scherenarm und dem zweiten Scherenarm und dem Fahrzeugsitzoberteil und dem Fahrzeugsitzunterteil die Freiheitsgrade der vier Loslager minimiert. Besonders bevorzugt ist ein erstes Verbindungselement vorgesehen, welches den ersten Scherenarm mit einem Festlager, welches auf der Welle angeordnet ist, verbindet, und wobei ein zweites Verbindungselement vorgesehen ist, welches ein erstes Verbindungselementteil und ein zweites Verbindungselementteil aufweist, wobei das erste Verbindungselementteil mit dem zweiten Scherenarm und den zweiten Verbindungselementteil drehbar verbunden ist und wobei das zweite Verbindungselementteil mit dem ersten Verbindungselementteil, dem ersten Scherenarm und dem Fahrzeugsitzoberteil drehbar verbunden sind.

Gemäß einer weiteren bevorzugten Ausführungsform ist es vorgesehen, dass das zweite Loslager und das vierte Loslager jeweils als ein Verlagerungselement ausgebildet sind, sodass jeweils der erste Scherenarm und der zweite Scherenarm gegenüber der Welle verlagerbar sind. Eine Verlagerung hinsichtlich der Welle heißt, dass eine Verlagerung des ersten Scherenarms und des zweiten Scherenarms in der Fahrzeugsitzlängsrichtung vorgesehen ist. Das Verlagerungselement kann dabei als ein Gleitelement oder als ein Rollelement ausgebildet sein, sodass eine leichtgängige Verlagerung des ersten Scherenarms und des zweiten Scherenarms gegenüber der Welle gewährleistet werden kann.

Gemäß einer weiteren bevorzugten Ausführungsform ist es vorgesehen, dass in Fahrzeugsitzlängsrichtung gesehen das zweite Loslager vor dem dritten Loslager und das erste Loslager vor den vierten Loslager angeordent ist.

Durch eine Wankbewegung des Fahrzeugsitzes und einer entsprechenden Nachführung des Federträgerelement, welches in Verbindung mit dem ersten, beziehungsweise dem zweiten Fluidfederelement steht, welche insbesondere elastisch deformierbar ausgebildet sein können, wird durch das Federträgerelement eine Deformierung der Fluidfederelemente hervorgerufen, wodurch eine Federkraft, beziehungsweise eine Rücksteuerkraft der Fluidfederelemente erzeugt wird.

Weitere vorteilhafte Ausführungsformen ergeben sich aus den Unteransprüchen.

Weitere Ziele, Vorteile und Zweckmäßigkeiten der vorliegenden Erfindung sind der nachfolgenden Beschreibung in Verbindung mit den Zeichnungen zu entnehmen. Hierbei zeigen:
- Fig. 1A: Fahrzeugsitz gemäß einer bevorzugten Ausführungsform in einer perspektivischen Ansicht;
- Fig. 1B: Fahrzeugsitz nach Figur 1A in einer weitergehenden Ausführungsform;
- Fig. 2A: Fahrzeugsitz gemäß einer bevorzugten Ausführungsform in einer neutralen Stellung;
- Fig. 2B: Fahrzeugsitz nach Figur 2A ausgelenkten Stellung;
- Fig. 3A: Scherenanordnung nach einer ersten Ausführungsform;
- Fig. 3B: Scherenanordnung nach einer zweiten Ausführungsform;
- Fig. 4A: schematische Darstellung des Fahrzeugsitzes nach Figur 1A in der neutralen Stellung;
- Fig. 4B: schematische Darstellung des Fahrzeugsitzes nach Figur 1A in der nach unten verlagerten Stellung;
- Fig. 5A: Federträgerelement in einer ersten perspektivischen Ansicht;
- Fig. 5B: Federträgerelement in einer zweiten perspektivischen Ansicht.

In den Figuren werden gleiche Bauelemente mit den gleichen Bezugszeichen bezeichnet, wobei in machen Figuren die Bezugszeichen zur besseren Übersichtlichkeit weggelassen werden können.

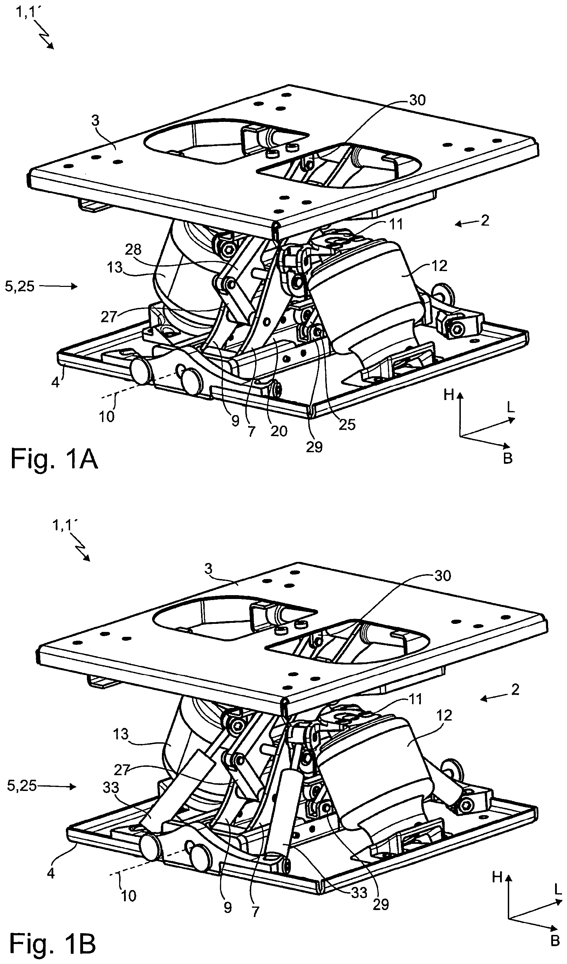

In der Figur 1A ist ein Fahrzeugsitz 1, beziehungsweise ein Fahrzeugsitzunterbau 1' dargestellt, wobei der Fahrzeugsitz 1 ein Fahrzeugsitzoberteil 3 und ein Fahrzeugsitzunterteil 4 aufweist, welche mittels einer Federeinheit 2 miteinander derart verbunden sind, dass das Fahrzeugsitzoberteil und das Fahrzeugsitzunterteil relativ zueinander bewegbar und federbar sind. Weiter ist zu erkennen, dass die Federeinheit 2 drehbar um eine erste Drehachse 10 mit dem Fahrzeugsitzunterteil 4 verbunden ist.

Die Federeinheit umfasst eine Scherenanordnung 5 mit einem ersten Scherenarm 6 und einem zweiten Scherenarm 7, wobei die Federeinheit weiter einen Federelementträger 11 und ein erstes Fluidfederelement 12 sowie ein zweites Fluidfederelement 13 aufweist. Wie zu erkennen ist, ist der Federelementträger drehbar um eine zweite Drehachse mit dem ersten Scherenarm und drehbar um eine dritte Drehachse 15 mit dem zweiten Scherenarm 7 verbunden, wobei das erste Fluidfederelement 12 einerseits mit dem Fahrzeugsitzunterteil 4 und andererseits mit dem Federelementträger 11 verbunden ist, wobei weiter das erste Fluidfederelement 12 in einem ersten Winkel 16 zu einer Fahrzeugsitzbreitenrichtung B und in einem zweiten Winkel 17 zu einer Fahrzeugsitzhöhenrichtung H angeordnet ist.

Die nähere Anordnung der Fluidfederelemente 12, 13 sowie die nähere Ausgestaltung der Scherenanordnung 5 wird in den nachfolgenden Figuren weiter beschrieben.

Das erste Fluidfederelement 12, beziehungsweise das zweite Fluidfederelement 13 sind in der Figur 1A als eine elastisch deformierbare Luftfeder ausgebildet.

Es ist weiterhin denkbar, dass das erste Federelement 12 als eine Luftfeder ausgebildet ist und das zweite Federelement 13 als eine mechanische Feder, oder umgekehrt.

Weiter weist die Scherenanordnung 5 ein erstes Verbindungselement 25 und ein zweites Verbindungselement 26 auf, wobei das zweite Verbindungselement 25 ein erstes Verbindungselementteil 27 und ein zweites Verbindungselementteil 28 aufweist, wobei das erste Verbindungselement 25 drehbar mit dem ersten Scherenarm 6 verbunden ist und andererseits mit einem ersten Festlager 29 verbunden ist, wobei das erste Festlager 29 mit einer Welle 20 verbunden ist.

Weiter ist das erste Verbindungselementteil 27 drehbar mit dem zweiten Scherenarm 7 sowie drehbar mit dem zweiten Verbindungselementteil 28 verbunden, wobei das zweite Verbindungselementteil 28 weiter drehbar mit dem ersten Scherenarm 7 und mittels eines Festlagers 30 mit dem Fahrzeugsitzoberteil 3 verbunden ist.

Die Figur 1B zeigt den gleichen Fahrzeugsitz 1 wie in der Figur 1A dargestellt, wobei zusätzlich Dämpferelemente 33 vorgesehen sind, wobei mindestens 1 Dämpferelement 33 bevorzugt mindestens 2 Dämpferelemente 33 und besonders bevorzugt vier Dämpferelemente 33 vorgesehen sind, welche jeweils in einem Winkel zu der Fahrzeugsitzlängslichtung L, der Fahrzeugsitzbreitenrichtung B und der Fahrzeugsitzhöhenrichtung H angeordnet sind. Weiter sind die Dämpferelemente 33 einerseits mit dem Federelementträger 11 verbunden und andererseits mit dem Fahrzeugsitzunterteil 4.

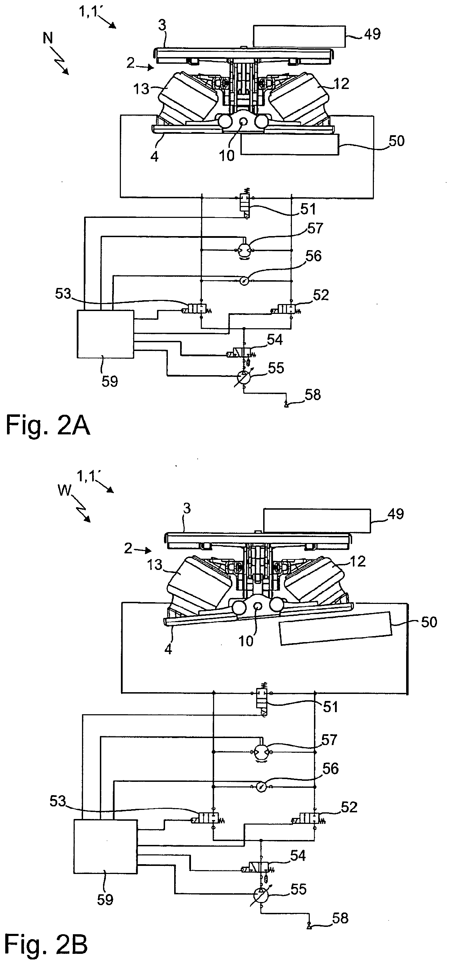

In den Figuren 2A und 2B ist schematisch ein Fahrzeugsitz 1 gemäß einer erfindungsgemäßen Ausführungsform dargestellt, wobei der Fahrzeugsitz 1 nach Figur 2A in der neutralen Stellung N bzw. waagerechten Stellung und nach Figur 2B in einer Wankstellung W dargestellt ist, wobei die Wankstellung W bereits ausgeglichen worden ist, da das Fahrzeugsitzoberteil 3 in waagerechter Stellung ist.

Die zugrunde liegenden Bauelemente sowie deren Anordnung und Funktion werden im Folgenden kurz beschrieben und dargestellt.

Insbesondere ist eine Pumpeinheit 57 vorgesehen, welche mit dem ersten Fluidfederelement 12 und dem zweiten Fluidfederelement 13 in fluidischer Verbindung steht. Bei einer Wankbewegung des Fahrzeugsitzes 1, welche durch eine externe Krafteinwirkung auf den Fahrzeugsitz 1 hervorgerufen wird, wird abhängig von der Art der Auslenkung bzw. Wankbewegung ein Druckausgleich zwischen dem ersten Fluidfederelement 12 und dem zweiten Fluidfederelement 13 vorgenommen.

Es ist vorgesehen, dass das Umpumpen des Fluids derart ist, dass während einer Auslenkung des Fahrzeugsitzes 1 abhängig von der Richtung und der Art der Auslenkung von dem ersten Fluidfederelement 12 zu dem zweiten Fluidfederelement 13 oder umgekehrt umgepumpt wird und das Umpumpen des Fluids während einer neutralen Stellung des Fahrzeugsitzes 1 verhindert ist.

Neutrale Stellung bzw. waagerechte Stellung heißt hierbei, dass keine Kraft auf den Fahrzeugsitz und insbesondere das Fahrzeugsitzoberteil 3 einwirkt, so dass das Fahrzeugsitzoberteil 3 in der Waagerechten verbleibt.

Weiter ist es vorgesehen, dass ein Differenzdruckmessgerät 56 vorgesehen ist, welches fluidisch mit dem ersten Fluidfederelement 12 und dem zweiten Fluidfederelement 13 verbunden ist und parallel zu der Pumpeinheit 57 angeordnet ist, wobei das Differenzdruckmessgerät 56 dazu vorgesehen und ausgebildet ist, Druckschwankungen zwischen dem ersten Fluidfederelement 12 und dem zweiten Fluidfederelement 13 zu erfassen.

Insbesondere wird bei Wankbewegungen ein Umpumpen von Fluid zwischen den Fluidfederelementen 12, 13 vorgenommen. Bei keiner Auslenkung des Fahrzeugsitzes 1 oder einer vertikalen Auslenkung des Fahrzeugsitzes 1 ist kein Umpumpen notwendig, da das Fahrzeugsitzoberteil 3 in seiner waagerechten Anordnung verbleibt.

Dabei sind verschiedene Auslenkungen hinsichtlich der Art zu unterscheiden. Eine erste Auslenkung ist denkbar, wenn das Fahrzeug in schräger Position steht oder konstant in schräger Position fährt, beispielsweise beim Pflügen oder dergleichen. Die Pumpeinheit 57 pumpt solange Fluid von dem einen Fluidfederelement 12, 13 zu dem anderen Fluidfederelement 12, 13 um, bis die wirkende Vertikalkraft der einzelnen Fluidfederelemente 12, 13 gleich ist, also das Fahrzeugsitzoberteil 3 in der waagerechten Position gehalten ist. Mittels des Differenzdruckmessgeräts 56 kann eine Luftmenge ermittelt werden, welche zwischen dem ersten Fluidfederelement 12 und dem zweiten Fluidfederelement 13 umgepumpt werden soll. Durch die allgemeine Beziehung zwischen wirkender Kraft, Druck und (Wirk-) Fläche A kann mittels des Differenzdruckmessgeräts die Druckabweichung bzw. Druckdifferenz erfasst werden und somit die Kraft abgestimmt werden.

Dadurch kann die benötigte Fluidmenge mittels des Differenzdruckmessgeräts 56 bestimmt werden.

Eine zweite Auslenkung ist denkbar, wenn das Fahrzeug sich dynamisch bewegt, das heißt, dass das Fahrzeug einer Schwingung unterliegt, welche sich auch auf den Fahrzeugsitz 1 überträgt. Dabei muss unterschieden werden zwischen einer hochfrequenten und einer niederfrequenten Schwingung.

Bei der niederfrequenten Schwingung wankt das Fahrzeug in einem niedrigen Frequenzbereich. Bevorzugt wird mittels des Differenzdruckmessgeräts 56 Druckschwankungen der Fluidfederelemente festgestellt und entsprechend dieser die Pumpeinheit 57 angesteuert. Voraussetzung hierfür ist natürlich, dass die Pumpeinheit 57 ausgebildet ist, diese Leistung erbringen zu können, also hinsichtlich der Pumpleistung und des Fluiddurchsatzes.

Bei einer hochfrequenten Schwingung mit einer kleinen Amplitude ist der Sachverhalt anders. Das Differenzdruckmessgerät 56 registriert Änderungen des Differenzdrucks, also der Druckdifferenz zwischen den Drücken des ersten Fluidfederelements 12 und des zweiten Fluidfederelements 13, welche unter einem definierbaren Druckniveau liegen. Das Amplitudenverhältnis zwischen der Amplitude des Differenzdrucks und der Auslenkung des Fahrzeugs ist kleiner als 1, so dass sich das schwingende System in einem (über-) kritischen Bereich befindet. Ein Umpumpen mittels der Pumpeinheit 57 ist hierbei unwirtschaftlich und wird deaktiviert bzw. unterbrochen, da eine zu große Pumpe bzw. eine Pumpe mit großer Pumpleistung nötig wäre.

Ein weiterer Sachverhalt ist eine hochfrequente Schwingung mit einer großen Amplitude, das heißt, dass eine schlagartige Änderung des Differenzdrucks über dem definierbaren Druckniveau registriert wird.

Für diesen Fall ist es gemäß einer bevorzugten Ausführungsform vorgesehen, dass ein erstes Ventilelement 51 vorgesehen ist, welches parallel zu der Pumpeinheit 57 angeordnet ist, wobei das erste Ventilelement 51 geöffnet ist bei einer hochfrequenten Auslenkung mit einer großen Amplitude, und sonst geschlossen ist.

Durch das plötzliche Öffnen des ersten Ventilelements 51 kann ein schlagartiger Druckausgleich zwischen den Fluidfederelementen 12, 13 erfolgen, so dass aufgrund der Massenträgheit des Fahrzeugsitzoberteils 3 seine ursprüngliche Position erhalten werden kann, also die waagerechte Stellung des Fahrzeugsitzoberteils 3.

Gemäß einer weiteren bevorzugten Ausführungsform ist es vorgesehen, dass ein zweites Ventilelement 52 und ein drittes Ventilelement 53 vorgesehen sind, wobei das zweite Ventilelement 52 mit dem ersten Fluidfederelement 12 und das dritte Ventilelement 53 mit dem zweiten Fluidfederelement 13 fluidisch verbunden ist, wobei das zweite Ventilelement 52 und das dritte Ventilelement 53 parallel zueinander angeordnet sind, und wobei das zweite Ventilelement 52 und das dritte Ventilelement 53 mittels eines vierten Ventilelements 54 mit einer Verdichtereinheit 55 fluidisch verbunden sind, wobei abhängig von einer Schaltstellung des zweiten Ventilelements 52, des dritten Ventilelements 53 und des vierten Ventilelements 54 ein Fluid in ein Fluidfederelement 12, 13 oder in beide Fluidfederelement 12, 13 oder aus einem oder beiden Fluidfederelementen 12, 13 förderbar ist.

Um Fluid in des System fördern zu können, ist es notwendig, dass das vierte Ventilelement 54 geöffnet ist. Ist das vierte Ventilelement 54 geschlossen, so kann kein Fluid zu den Fluidfederelementen 12, 13 gefördert werden.

Ist das vierte Ventilelement 54 geöffnet, so können folgende Stellungen des zweiten Ventilelements 52 und des dritten Ventilelements 53 möglich sein:
- das zweite Ventilelement 52 und das dritte Ventilelement 53 sind geöffnet;
- das zweite Ventilelement 52 ist geöffnet und das dritte Ventilelements 53 ist geschlossen;
- das zweite Ventilelement 52 ist geschlossen und das dritte Ventilelement 53 ist geöffnet.

Sind beide Ventilelemente 52, 53 geöffnet, so kann Fluid in beide Fluidfederelemente 12, 13 strömen, wodurch die Sitzposition eingestellt werden kann.

Ist nur eines der beiden Ventilelemente 52, 53 geöffnet, so wird nur das entsprechend zugehörige Fluidfederelement 12, 13 mit Fluid befüllt oder Fluid entnommen. Dies ist insbesondere bei einer Hangfahrt oder dergleichen vorteilhaft.

Über die Verdichtereinheit 55, welche mit einer Fluidquelle 58 fluidisch verbunden ist, kann das System mit dem Fluid gefüllt werden, so dass damit die Grundhöhe der Federung eingestellt werden kann. Das vierte Ventilelement 54, welches vorzugsweise als ein 3/2 Wegeventil ausgebildet ist, dient für den Fluidauslass und damit für die Einstellung einer tieferen oder höheren Sitzposition. Damit die Luft weiter zu den Fluidfederelementen 12, 13 strömen kann, müssen das zweite Ventilelement 52 und das dritte Ventilelement 53 zusammen mit der Verdichtereinheit 58 angesteuert werden. Bei Betätigung nur eines dieser Ventilelemente 52, 53 kann ein Fluidfederelement 12, 13 mit mehr Druck beaufschlagt werden als die andere. Dies dient z.B. dem Ausgleich der statischen Auslenkung.

Weiterhin kann mittels der Pumpeinheit 57 das Fluid von dem einen Fluidfederelement 12, 13 in das andere Fluidfederelement 12, 13 gepumpt werden. Dies ist die Ausführung der beschriebenen, aktiven Schwingungsisolation in Wankrichtung W. Das erste Ventilelement 51 weist einen wesentlich größeren Durchflussquerschnitt auf als das zweite Ventilelement 52 und das dritte Ventilelement 53. Damit kann bei Betätigung des vierten Ventilelements 54 ein schneller Druckausgleich zwischen den Fluidfederelementen 12, 13 stattfinden. Dies ist z.B. hilfreich, wenn bei sehr schnellen Bewegungen des Fahrzeugkabinenbodens das Fahrzeugsitzoberteil 3 der Federung seine waagerechte Stellung halten soll. Durch das Öffnen dieser Leitung wird dann keine zusätzliche Kraftkomponente in Auslenkungsrichtung erzeugt.

Für eine kurze Reaktionszeit sollten die Schlauchleitungen, welche die fluidischen Verbindungen zwischen den jeweiligen Elementen darstellen, möglichst kurz sein. Daher sollte das vierte Ventilelement 54 möglichst nahe zwischen den Fluidfederelementen 12, 13 angeordnet werden.

Gemäß einer weiteren bevorzugten Ausführungsform ist es vorgesehen, dass ein erster Sensor 49 an dem Fahrzeugsitzoberteil 3 und ein zweiter Sensor 50 an dem Fahrzeugsitzunterteil 4 angeordnet sind, wobei mittels des ersten Sensors 49 Abweichungen von der waagerechten Stellung des Fahrzeugsitzoberteils 3 und mittels des zweiten Sensors 50 eine Amplitude und eine Frequenz der Auslenkung des Fahrzeugsitzes 1 ermittelbar sind.

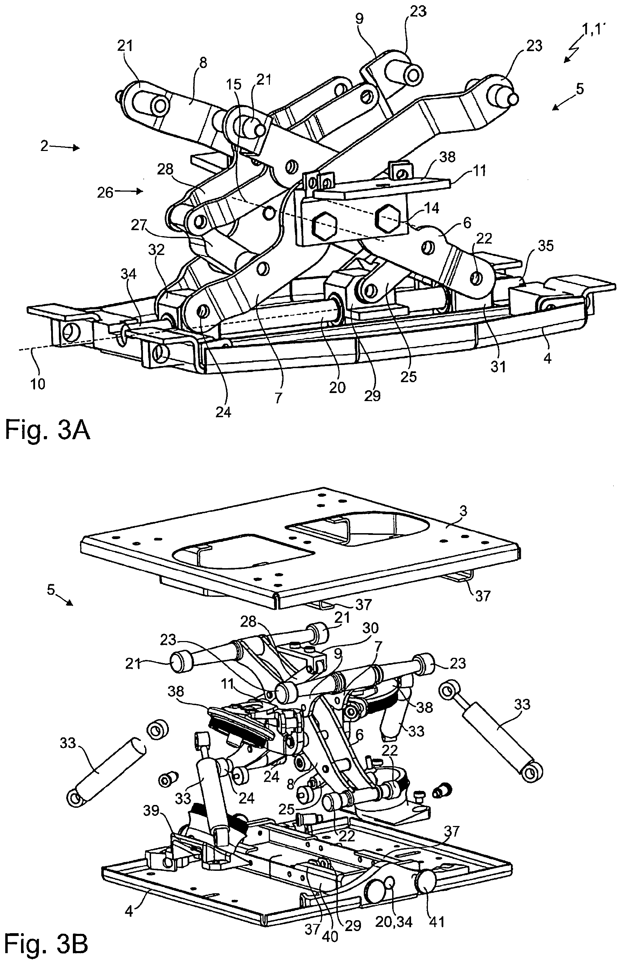

In der Figur 3A ist eine erste Ausführungsform der Scherenanordnung 5 und in der Figur 3B eine zweite Ausführungsform der Scherenanordnung 5 zu erkennen.

Zunächst wird die Ausführungsform der Scherenanordnung 5 gemäß der Figur 3A beschrieben.

Die Scherenanordnung 5 umfasst einen ersten Scherenarm 6, einen zweiten Scherenarm 7, einen dritten Scherenarm 8 und einen vierten Scherenarm 9.

Die Ausführungen des dritten Scherenarms 8 und des vierten Scherenarms 9 gelten entsprechend dem zugehörigen ersten Scherenarm 5 und dem zugehörigen zweiten Scherenarm 7. Dies gilt insbesondere, da der dritte Scherenarm 8 identisch verlaufend mit dem ersten Scherenarm 6 und der vierte Scherenarm 9 mit dem zweiten Scherenarm 7 ist.

Wie weiter zu erkennen, ist der Federelementträger 11 vorgesehen, welcher drehbar um eine zweite Drehachse 14 mit dem ersten Scherenarm 6 und drehbar um eine dritte Drehachse 15 mit dem zweiten Scherenarm 7 verbunden ist.

Weiter ist der erste Scherenarm 6 mittels eines ersten Loslagers 21 mit dem Fahrzeugsitzoberteil 3 und mittels eines zweiten Loslagers 22 mit einer Welle 20 und der zweite Scherenarm 7 mittels eines dritten Loslagers 23 mit dem Fahrzeugsitzoberteil 3 und mittels eines vierten Loslagers 24 mit der Welle 20 verbunden, wobei ein erstes Verbindungselement 25 den ersten Scherenarm 6 mit einem ersten Festlager 29, welches auf der Welle 20 angeordnet ist, verbindet, und wobei ein zweites Verbindungselement 26 vorgesehen ist, welches ein erstes Verbindungselementteil 27 und ein zweites Verbindungselementteil 28 aufweist, wobei das erste Verbindungselementteil 27 mit dem zweiten Scherenarm 7 und dem zweiten Verbindungselementteil 28 drehbar verbunden ist, und wobei das zweite Verbindungselementteil 28 mit dem ersten Verbindungselementteil 27, dem ersten Scherenarm 6 und dem Fahrzeugsitzoberteil 3 drehbar verbunden ist. Dabei ist das zweite Verbindungselementteil 28 insbesondere mit einem zweiten Festlager 30 drehbar verbunden. Das zweite Festlager ist dabei an dem Fahrzeugsitzoberteil 3 angeordnet.

Das erste Loslager 21 und das zweite Loslager 23 sind jeweils als Laufrollen 36 ausgebildet, welche mit dem jeweiligen Scherenarm 6, 7, 8, 9 drehbar verbunden ist und in einer Laufschiene 37 rollend gelagert ist, wobei die Laufschiene 37 an dem Fahrzeugsitzoberteil 3 angeordnet ist.

Das zweite Loslager 22, beziehungsweise das vierte Loslager 24 ist dabei derart ausgebildet, dass ein erstes Verlagerungselement 31 und ein zweites Verlagerungselement 32 vorgesehen sind, wobei an dem ersten Verlagerungselement der erste Scherenarm 6 drehbar verbunden ist und an dem zweiten Verlagerungselement 32 der zweite Scherenarm 7 drehbar angeordnet ist.

Die Verlagerungselemente 31, 32 sind dabei derart verlagerbar, dass sie gegenüber der Welle 20 verlagerbar sind in Richtung der ersten Drehachse 10.

Eine Verlagerung des ersten Verlagerungselements 31 und des zweiten Verlagerungselements 32 erfolgt insbesondere bei einer Vertikalbewegung des Fahrzeugsitzes 1.

Dadurch, dass die Scherenarme 6, 7, 8, 9 jeweils mittels eines Loslagers mit dem Fahrzeugsitzunterteil, beziehungsweise dem Fahrzeugsitzoberteil 3 verbunden sind, ist es notwendig, die Freiheitsgrade hinsichtlich der Bewegung der Scherenanordnung 5 einzugrenzen. Dies geschieht mittels des ersten Verbindungselements 25 und des zweiten Verbindungselements 26.

Weiter weist der Federelementträger 11 eine Adapterplatte 38 auf, mittels welcher das jeweilige Fluidfederelement 12, 13 (hier nicht dargestellt) mit dem Federelementträger 11 verbunden werden kann.

Die zweite Ausführungsform, welche in der Figur 3B dargestellt ist, ist vom Funktionsprinzip identisch mit der Ausführungsform der Figur 3A, wobei jedoch die Ausgestaltung sich unterscheidet.

Die Ausführungsform der Figur 3B umfasst ebenso einen ersten Scherenarm 6, einen zweiten Scherenarm 7, einen dritten Scherenarm 8, und einen vierten Scherenarm 9, wobei der erste Scherenarm 6 und der dritte Scherenarm 8 sowie der zweite Scherenarm 7 und der vierte Scherenarm 9 jeweils identisch verlaufend sind. Ebenso sind die jeweiligen Scherenarme 6, 7, 8, 9 mittels eines Loslagers 21, 23 welches ausgebildet ist als eine Laufrolle 36, in der Führungsschiene 37 des Fahrzeugsitzoberteil 3 geführt.

Ebenso weist diese Ausführungsform das erste Verbindungselement 25 und das zweite Verbindungselement 26 auf, in derselben Anordnung und Funktion wie in der Figur 3A beschrieben.

Unterschiedlich ist hierbei die Anordnung der Loslager 22, 24 gegenüber dem Fahrzeugsitzunterteil 4. Es ist insbesondere ein Trageteil 40 dargestellt, welches drehbar um die erste Drehachse 10 mit dem Fahrzeugsitzunterteil 4 verbunden ist. Dabei ist eine Welle 20 vorgesehen an dem vorderen und dem hinteren Ende des Trageteils in Fahrzeugsitzlängsrichtung L, wobei das Trageteil 40 ebenso Laufschienen 37 aufweist, in welchen die Loslager 22, 24 mittels Laufrollen 36 abrollen können gegenüber dem Trageteil 40.

Weiter ist auf dem Trageteil 40 das erste Festlager 29 angeordnet, mittels welchem der erste Scherenarm 6 mittels des ersten Verbindungselements 25 verbunden ist.

In der Figur 3B ist ebenso schematisch eine untere Adapterplatte 39 dargestellt, mittels welcher das Fluidfederelement 12, 13 jeweils mit dem Fahrzeugsitzunterteil 4 verbunden werden kann. Wie zu erkennen ist, weist die untere Adapterplatte 39 einen schrägen Anteil auf, mittels welchem der Winkel des entsprechenden Fluidfederelements 12, 13 eingestellt werden kann.

Gleiches gilt ebenso für die obere Adapterplatte 38, welche gegenüber der Fahrzeugsitzbreitenrichtung B einen Winkel aufweist, wobei die Schrägstellung der oberen Adapterplatte 38 und der unteren Adapterplatte 39 parallel zueinander ist.

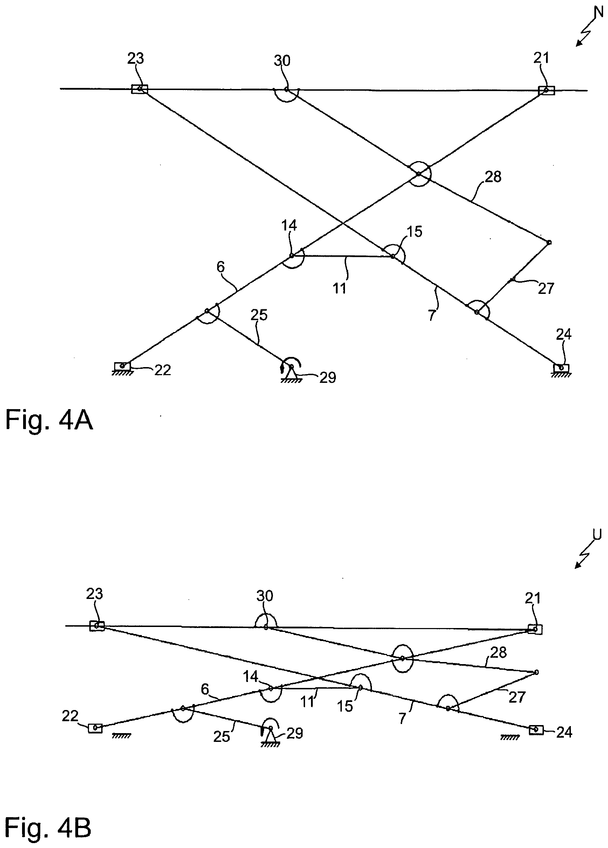

In den Figuren 4A und 4B ist die Kinematik der beweglichen Teile des Fahrzeugsitzes 1 nochmal schematisch dargestellt.

In der Figur 4A ist der Fahrzeugsitz in der Neutralstellung N und in der Figur 4B in der nach unten ausgelegten Stellung U dargestellt.

Die Bewegung der beweglichen Teile, welche mit dem entsprechenden Bezugszeichen bezeichnet sind, können durch einen Vergleich der Figuren 4A und 4B entnommen werden.

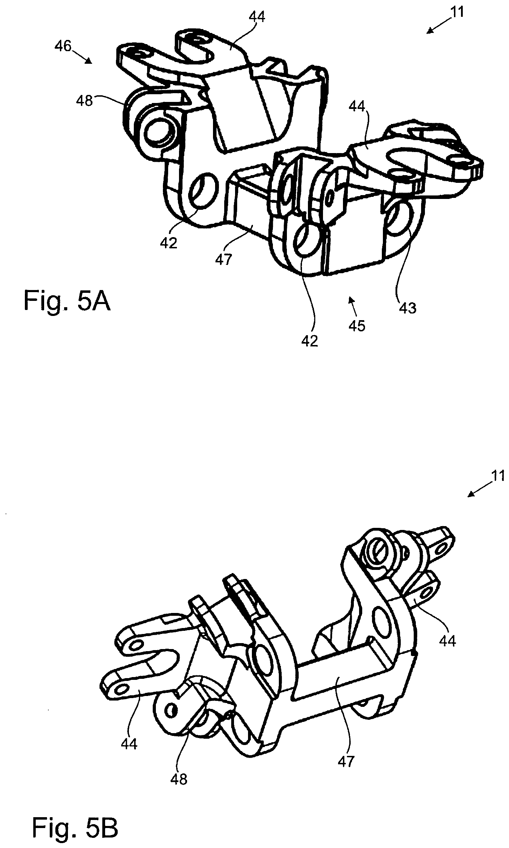

Weiter ist in den Figuren 5A und 5B der Federelementträger 11 in einer ersten perspektivischen und in einer zweiten perspektivischen Darstellung dargestellt.

Der Federelementträger 11 weist dabei eine erste Federelementträgerhalterung 45 und eine zweite Federelementträgerhalterung 46 auf, welche mittels eines Verbindungsteils 47 miteinander verbunden sind. Die jeweilige Federelementträgerhalterung 45, 46 weist eine erste Verbindungsstelle 42 und eine zweite Verbindungsstelle 43 auf, mittels welchen der Federelementträger mit dem ersten Scherenarm 6 und dem zweiten Scherenarm 7, beziehungsweise dem drittem Scherenarm 8 und dem vierten Scherenarm 9 verbunden werden kann, insbesondere drehbar.

Weiter weist sowohl die erste Federelementhalterung 45 als auch die zweite Federelementhalterung 46 eine Adapterplattenhalterung 44 auf, mittels welcher die obere Adapterplatte 38 mit dem Federelementträger verbunden werden kann.

Sämtliche in den Anmeldeunterlagen offenbarten Merkmale werden als wesentlich erachtet, sofern sie einzeln oder in Kombination gegenüber dem Stand der Technik neu sind.

### Bezugszeichenliste

- 1: Fahrzeugsitz
- 2: Federeinheit
- 3: Fahrzeugsitzoberteil
- 4: Fahrzeugsitzunterteil
- 5: Scherenanordnung
- 6: erster Scherenarm
- 7: zweiter Scherenarm
- 8: dritter Scherenarm
- 9: vierter Scherenarm
- 10: erste Drehachse
- 11: Federelementträger
- 12: erstes Fluidfederelement
- 13: zweites Fluidfederelement
- 14: zweite Drehachse
- 15: dritte Drehachse
- 20: Welle
- 21: erstes Loslager
- 22: zweites Loslager
- 23: drittes Loslager
- 24: viertes Loslager
- 25: erstes Verbindungselement
- 26: zweites Verbindungselement
- 27: erstes Verbindungselementteil
- 28: zweites Verbindungselementteil
- 29: erstes Festlager
- 30: zweites Festlager
- 31: erstes Verlagerungselement
- 32: zweites Verlagerungselement
- 33: Dämpferelement
- 34: erstes Ende der Welle
- 35: zweites Ende der Welle
- 36: Laufrolle
- 37: Laufschiene
- 38: Adapterplatte
- 39: untere Adapterplatte
- 40: Trageteil
- 41: Arretierungselement
- 42: erste Verbindungsstelle
- 43: zweite Verbindungsstelle
- 44: Adapterplattenhalterung
- 45: erste Federelementträgerhalterung
- 46: zweite Federelementträgerhalterung
- 47: Verbindungteil
- 48: Dämpferelementhalterung
- 49: erster Sensor
- 50: zweiter Sensor
- 51: erstes Ventilelement
- 52: zweites Ventilelement
- 53: drittes Venitlelement
- 54: viertes Ventilelement
- 55: Verdichtereinheit
- 56: Differenzdruckmessgerät
- 57: Pumpeinheit
- 58: Fluidquelle
- 59: Regeleinheit

- N: neutrale Stellung
- O: nach oben ausgelenkte Stellung
- U: nach unten ausgelenkte Stellung
- W: Wankstellung
- L: Fahrzeugsitzlängsrichtung
- B: Fahrzeugsitzbreitenrichtung
- H: Fahrzeugsitzhöhenrichtung

## Patentansprüche

1. Fahrzeugsitz (1) mit einer Federeinheit (2) zum Federn von Wank- und Vertikalbewegungen des Fahrzeugsitzes (1), wobei der Fahrzeugsitz (1) ein Fahrzeugsitzoberteil (3) und ein Fahrzeugsitzunterteil (4) aufweist, wobei das Fahrzeugsitzoberteil (3) und das Fahrzeugsitzunterteil (4)mittels der Federeinheit (2) verbunden sind, so dass das Fahrzeugsitzoberteil (3) und das Fahrzeugsitzunterteil (4) relativ zueinander bewegbar sind, wobei die Federeinheit (2) eine Scherenanordnung (5) mit einem ersten Scherenarm (6) und einem zweiten Scherenarm (7) aufweist,
wobei
die Federeinheit (2) drehbar um eine erste Drehachse (10) mit dem Fahrzeugsitzunterteil (4) verbunden ist und einen Federelementträger (11) und ein erstes Fluidfederelement (12) und ein zweites Fluidfederelement umfasst,
wobei das erste Fluidfederelement (12) und das zweite Fluidfederelement jeweils mit dem Fahrzeugsitzunterteil (4) und mit dem Federelementträger (11) verbunden ist, , wobei mittels einer Pumpeinheit (57) zwischen dem ersten Fluidfederelement (12) und dem zweiten Fluidfederelement (13) eine Kraftabstimmung durchführbar ist, so dass das Fahrzeugsitzoberteil (3) im Wesentlichen in einer waagerechten Stellung ist.

2. Fahrzeugsitz nach Anspruch 1,
**dadurch gekennzeichnet, dass**
mittels einer Pumpeinheit (57) ein Fluid zwischen dem ersten Fluidfederelement (12) und dem zweiten Fluidfederelement (13) umpumpbar ist, so dass das Fahrzeugsitzoberteil (3) im Wesentlichen in einer waagerechten Stellung ist.

3. Fahrzeugsitz (1) nach Anspruch 1 oder 2,
**dadurch gekennzeichnet, dass**
das Umpumpen des Fluids derart ist, dass während einer Auslenkung des Fahrzeugsitzes (1) abhängig von der Richtung und der Art der Auslenkung von dem ersten Fluidfederelement (12) zu dem zweiten Fluidfederelement (13) oder umgekehrt umgepumpt wird und das Umpumpen des Fluids während einer neutralen Stellung (N) des Fahrzeugsitzes (1) verhindert ist.

4. Fahrzeugsitz (1) nach einem der Ansprüche 1 bis 3,
**dadurch gekennzeichnet, dass**
ein erstes Ventilelement (51) vorgesehen ist, welches parallel zu der Pumpeinheit (57) angeordnet ist, wobei das Ventilelement (51) geöffnet ist bei einer hochfrequenten Auslenkung mit einer großen Amplitude, und sonst geschlossen ist.

5. Fahrzeugsitz (1) nach einem der Ansprüche 1 bis 4,
**dadurch gekennzeichnet, dass**
ein Differenzdruckmessgerät (56) vorgesehen ist, welches fluidisch mit dem ersten Fluidfederelement (12) und dem zweiten Fluidfederelement (13) verbunden ist und parallel zu der Pumpeinheit (57) angeordnet ist, wobei das Differenzdruckmessgerät (56) dazu vorgesehen und ausgebildet ist, Druckschwankungen zwischen dem ersten Fluidfederelement (12) und dem zweiten Fluidfederelement (13) zu erfassen.

6. Fahrzeugsitz (1) nach Anspruch 5,
**dadurch gekennzeichnet, dass**
mittels des Differenzdruckmessgerät (56) eine Fluidmenge ermittelbar ist, welche zwischen dem ersten Fluidfederelement (12) und dem zweiten Fluidfederelement (13) umgepumpt werden soll.

7. Fahrzeugsitz (1) nach einem der Ansprüche 1 bis 6,
**dadurch gekennzeichnet, dass**
ein zweites Ventilelement (52) und ein drittes Ventilelement (53) vorgesehen sind, wobei das zweite Ventilelement (52) mit dem ersten Fluidfederelement (12) und das dritte Ventilelement (53) mit dem zweiten Fluidfederelement (13) fluidisch verbunden ist, wobei das zweite Ventilelement (52) und das dritte Ventilelement (53) parallel zueinander angeordnet sind, und wobei das zweite Ventilelement (52) und das dritte Ventilelement (53) mittels eines vierten Ventilelements (54) mit einer Verdichtereinheit (55) fluidisch verbunden sind, wobei abhängig von einer Schaltstellung des zweiten Ventilelements (52), des dritten Ventilelements (53) und des vierten Ventilelements (54) ein Fluid in ein Fluidfederelement (12, 13) oder in beide Fluidfederelement (12, 13) oder aus einem oder beiden Fluidfederelementen (12, 13) förderbar ist.

8. Fahrzeugsitz (1) nach einem der Ansprüche 1 bis 7,
**dadurch gekennzeichnet, dass**
ein erster Sensor (49) an dem Fahrzeugsitzoberteil (3) und bevorzugt ein zweiter Sensor (50) an dem Fahrzeugsitzunterteil (4) angeordnet sind, wobei mittels des ersten Sensors (49) Abweichungen von der waagerechten Stellung des Fahrzeugsitzoberteils (3) und bevorzugt mittels des zweiten Sensors (50) eine Amplitude und eine Frequenz der Auslenkung des Fahrzeugsitzes (1) ermittelbar sind.

9. Fahrzeugsitz (1) nach einem der Ansprüche 1 bis 8,
**dadurch gekennzeichnet, dass**
der Federelementträger (11) drehbar um eine zweite Drehachse (14) mit dem ersten Scherenarm (6) und drehbar um eine dritte Drehachse (15) mit dem zweiten Scherenarm (7) verbunden ist.

10. Fahrzeugsitz (1) mit einer Federeinheit (2) zum Federn von Wank- und Vertikalbewegungen des Fahrzeugsitzes (1), wobei der Fahrzeugsitz (1) ein Fahrzeugsitzoberteil (3) und ein Fahrzeugsitzunterteil (4) aufweist, wobei das Fahrzeugsitzoberteil (3) und das Fahrzeugsitzunterteil (4) mittels der Federeinheit (2) verbunden sind, so dass das Fahrzeugsitzoberteil (3) und das Fahrzeugsitzunterteil (4) relativ zueinander bewegbar sind, wobei die Federeinheit (2) eine Scherenanordnung (5) mit einem ersten Scherenarm (6) und einem zweiten Scherenarm (7) aufweist,
wobei
die Federeinheit (2) drehbar um eine erste Drehachse (10) mit dem Fahrzeugsitzunterteil (4) verbunden ist und ein erstes Fluidfederelement (12) und ein zweites Fluidfederelement umfasst,
wobei das erste Fluidfederelement (12) und das zweite Fluidfederelement jeweils mit dem Fahrzeugsitzunterteil (4) und mit dem Fahrzeugsitzoberteil (3) verbunden ist, ,
wobei mittels einer Pumpeinheit (57) ein Fluid zwischen dem ersten Fluidfederelement (12) und dem zweiten Fluidfederelement (13) umpumpbar ist, so dass das Fahrzeugsitzoberteil (3) im Wesentlichen in einer waagerechten Stellung ist.

11. Verfahren zum Federn von Wankbewegungen eines Fahrzeugsitzes (1) nach einem der Ansprüche 1 bis 10, umfassend die Verfahrensschritte:
a) Erkennen einer Auslenkung des Fahrzeugsitzes (1) an dem Fahrzeugsitzunterteil (4);
b) Ermitteln einer umzupumpenden Fluidmenge zwischen dem ersten Fluidfederelement (12) und dem zweiten Fluidfederelement (13), und Umpumpen dieser Fluidmenge, so dass das Fahrzeugsitzoberteil (3) in einer waagerechten Stellung gehalten wird.

12. Verfahren nach Anspruch 11, wobei zusätzlich zu der Auslenkung des Fahrzeugsitzes (1) an dem Fahrzeugsitzunterteil (4) eine Auslenkung an dem Fahrzeugsitzoberteil (3) erkannt wird.

## Claims

1. Vehicle seat (1) having a suspension unit (2) for cushioning rolling and vertical movements of the vehicle seat (1), wherein the vehicle seat (1) has a vehicle seat upper part (3) and a vehicle seat lower part (4), wherein the vehicle seat upper part (3) and the vehicle seat lower part (4) are connected by means of the suspension unit (2) so that the vehicle seat upper part (3) and the vehicle seat lower part (4) are movable relative to one another, wherein the suspension unit (2) has a scissor arrangement (5) having a first scissor arm (6) and a second scissor arm (7),
wherein
the suspension unit (2) is connected rotatably about a first axis of rotation (10) to the vehicle seat lower part (4) and comprises a spring element support (11) and a first fluid spring element (12) and a second fluid spring element (13),
wherein the first fluid spring element (12) and the second fluid spring element (13) are each connected to the vehicle seat lower part (4) and to the spring element support (11),
wherein a force matching between the first fluid spring element (12) and the second fluid spring element (13) can be carried out by means of a pump unit (57), so that the vehicle seat upper part (3) is substantially in a horizontal position.

2. Vehicle seat (1) according to claim 1,
**characterised in that**
a fluid can be pumped between the first fluid spring element (12) and the second fluid spring element (13) by means of the pump unit (57), so that the vehicle seat upper part (3) is substantially in a horizontal position.

3. Vehicle seat (1) according to either claim 1 or claim 2,
**characterised in that**
the pumping of the fluid is such that during a deflection of the vehicle seat (1), depending on the direction and type of deflection, fluid is pumped from the first fluid spring element (12) to the second fluid spring element (13) or vice versa, and the pumping of the fluid is prevented during a neutral position (N) of the vehicle seat (1).

4. Vehicle seat (1) according to any of claims 1 to 3,
**characterised in that**
a first valve element (51) is provided which is arranged parallel to the pump unit (57), the valve element (51) being opened in the event of a high-frequency deflection with a large amplitude and otherwise being closed.

5. Vehicle seat (1) according to any of claims 1 to 4,
**characterised in that**
a differential pressure measuring device (56) is provided which is fluidically connected to the first fluid spring element (12) and the second fluid spring element (13) and is arranged parallel to the pump unit (57), the differential pressure measuring device (56) being provided and configured to detect pressure fluctuations between the first fluid spring element (12) and the second fluid spring element (13).

6. Vehicle seat (1) according to claim 5,
**characterised in that**
an amount of fluid which is to be pumped between the first fluid spring element (12) and the second fluid spring element (13) can be determined by means of the differential pressure measuring device (56).

7. Vehicle seat (1) according to any of claims 1 to 6,
**characterised in that**
a second valve element (52) and a third valve element (53) are provided, the second valve element (52) being fluidically connected to the first fluid spring element (12) and the third valve element (53) being fluidically connected to the second fluid spring element (13), the second valve element (52) and the third valve element (53) being arranged parallel to one another, and the second valve element (52) and the third valve element (53) being fluidically connected to a compressor unit (55) by means of a fourth valve element (54), a fluid being able to be fed into a fluid spring element (12, 13) or into both fluid spring elements (12, 13) or from one or both fluid spring elements (12, 13) depending on a switching position of the second valve element (52), the third valve element (53) and the fourth valve element (54).

8. Vehicle seat (1) according to any of claims 1 to 7,
**characterised in that**
a first sensor (49) is arranged on the vehicle seat upper part (3) and preferably a second sensor (50) is arranged on the vehicle seat lower part (4), deviations from the horizontal position of the vehicle seat upper part (3) being able to be determined by means of the first sensor (49) and an amplitude and a frequency of the deflection of the vehicle seat (1) preferably being able to be determined by means of the second sensor (50).

9. Vehicle seat (1) according to any of claims 1 to 8,
**characterised in that**
the spring element support (11) is rotatably connected about a second axis of rotation (14) to the first scissor arm (6) and rotatably connected about a third axis of rotation (15) to the second scissor arm (7).

10. Vehicle seat (1) having a suspension unit (2) for cushioning rolling and vertical movements of the vehicle seat (1), wherein the vehicle seat (1) has a vehicle seat upper part (3) and a vehicle seat lower part (4), wherein the vehicle seat upper part (3) and the vehicle seat lower part (4) are connected by means of the suspension unit (2) so that the vehicle seat upper part (3) and the vehicle seat lower part (4) are movable relative to one another, wherein the suspension unit (2) has a scissor arrangement (5) having a first scissor arm (6) and a second scissor arm (7),
**characterised in that**
the suspension unit (2) is connected rotatably about a first axis of rotation (10) to the vehicle seat lower part (4) and comprises a first fluid spring element (12) and a second fluid spring element (13),
wherein the first fluid spring element (12) and the second fluid spring element (13) are each connected to the vehicle seat lower part (4) and to the vehicle seat upper part (3),
wherein a fluid can be pumped between the first fluid spring element (12) and the second fluid spring element (13) by means of a pump unit (57), so that the vehicle seat upper part (3) is substantially in a horizontal position.

11. Method for cushioning rolling movements of a vehicle seat (1) according to any of claims 1 to 10, comprising the method steps:
a) detecting a deflection of the vehicle seat (1) on the vehicle seat lower part (4);
b) determining an amount of fluid to be pumped between the first fluid spring element (12) and the second fluid spring element (13), and pumping this amount of fluid so that the vehicle seat upper part (3) is held in a horizontal position.

12. Method according to claim 11, wherein, in addition to the deflection of the vehicle seat (1) on the vehicle seat lower part (4), a deflection on the vehicle seat upper part (3) is detected.

## Revendications

1. Siège de véhicule (1) comportant une unité de suspension (2) pour amortir des mouvements de roulement et de suspension verticale du siège de véhicule (1), le siège de véhicule (1) présentant une partie supérieure de siège de véhicule (3) et une partie inférieure de siège de véhicule (4), la partie supérieure de siège de véhicule (3) et la partie inférieure de siège de véhicule (4) étant reliées au moyen de l'unité de suspension (2), de telle sorte que la partie supérieure de siège de véhicule (3) et la partie inférieure de siège de véhicule (4) sont déplaçables l'une par rapport à l'autre, l'unité de suspension (2) présentant un ensemble ciseaux (5) avec une première branche de ciseaux (6) et une seconde branche de ciseaux (7),
dans lequel l'unité de suspension (2) est reliée à la partie inférieure de siège de véhicule (4) de manière à pouvoir tourner autour d'un premier axe de rotation (10) et comporte un support d'élément ressort (11) et un premier élément ressort à fluide (12) et un second élément ressort à fluide,
dans lequel le premier élément ressort à fluide (12) et le second élément ressort à fluide sont reliés chacun à la partie inférieure de siège de véhicule (4) et au support d'élément ressort (11),
dans lequel un réglage de force entre le premier élément ressort à fluide (12) et le second élément ressort à fluide (13) est apte à être effectué au moyen d'une unité de pompe (57), de telle sorte que la partie supérieure de siège de véhicule (3) est essentiellement dans une position horizontale.

2. Siège de véhicule selon la revendication 1, **caractérisé par le fait qu'**
un fluide est apte à être pompé entre le premier élément ressort à fluide (12) et le second élément ressort à fluide (13) au moyen d'une unité de pompe (57), de telle sorte que la partie supérieure de siège de véhicule (3) est sensiblement dans une position horizontale.

3. Siège de véhicule (1) selon l'une des revendications 1 ou 2,
**caractérisé par le fait que**
le pompage du fluide est tel que, pendant une déflexion du siège de véhicule (1), en fonction de la direction et du type de la déflexion, du fluide est pompé du premier élément ressort à fluide (12) au second élément ressort à fluide (13) ou inversement, et le pompage du fluide est empêché pendant une position neutre (N) du siège de véhicule (1).

4. Siège de véhicule (1) selon l'une des revendications 1 à 3,
**caractérisé par le fait qu'**
un premier élément soupape (51) est prévu, lequel est disposé parallèlement à l'unité de pompe (57), l'élément soupape (51) étant ouvert lors d'une déflexion à haute fréquence avec une grande amplitude, et étant sinon fermé.

5. Siège de véhicule (1) selon l'une des revendications 1 à 4,
**caractérisé par le fait qu'**
un appareil de mesure de pression différentielle (56) est prévu, lequel est relié fluidiquement au premier élément ressort à fluide (12) et au second élément ressort à fluide (13) et est disposé parallèlement à l'unité de pompe (57), l'appareil de mesure de pression différentielle (56) étant prévu et conçu pour détecter des fluctuations de pression entre le premier élément ressort à fluide (12) et le second élément ressort à fluide (13).

6. Siège de véhicule (1) selon la revendication 5,
**caractérisé par le fait qu'**
une quantité de fluide, laquelle doit être pompée entre le premier élément ressort à fluide (12) et le second élément ressort à fluide (13), est déterminable au moyen du dispositif de mesure de pression différentielle (56).

7. Siège de véhicule (1) selon l'une des revendications 1 à 6,
**caractérisé par le fait qu'**
un deuxième élément soupape (52) et un troisième élément soupape (53) sont prévus, le deuxième élément soupape (52) étant relié fluidiquement au premier élément ressort à fluide (12), et le troisième élément soupape (53) étant relié fluidiquement au second élément ressort à fluide (13), le deuxième élément soupape (52) et le troisième élément soupape (53) étant disposés parallèlement l'un à l'autre, et le deuxième élément soupape (52) et le troisième élément soupape (53) étant reliés fluidiquement à une unité de compresseur (55) au moyen d'un quatrième élément soupape (54), un fluide étant apte à être transporté dans un élément ressort à fluide (12, 13) ou dans les deux éléments ressorts à fluide (12, 13) ou à partir de l'un ou des deux éléments ressorts à fluide (12, 13) en fonction d'une position de commutation du deuxième élément soupape (52), du troisième élément soupape (53) et du quatrième élément soupape (54).

8. Siège de véhicule (1) selon l'une des revendications 1 à 7,
**caractérisé par le fait qu'**
un premier capteur (49) est disposé sur la partie supérieure de siège de véhicule (3) et, de préférence, un second capteur (50) est disposé sur la partie inférieure de siège de véhicule (4), des déviations par rapport à la position horizontale de la partie supérieure de siège de véhicule (3) étant déterminables au moyen du premier capteur (49), et une amplitude et une fréquence de la déflexion du siège de véhicule (1) étant de préférence déterminables au moyen du second capteur (50).

9. Siège de véhicule (1) selon l'une des revendications 1 à 8,
**caractérisé par le fait que**
le support d'élément ressort (11) est relié de manière à pouvoir tourner autour d'un deuxième axe de rotation (14) à la première branche de ciseaux (6) et de manière à pouvoir tourner autour d'un troisième axe de rotation (15) à la seconde branche de ciseaux (7).

10. Siège de véhicule (1) comportant une unité de suspension (2) pour amortir des mouvements de roulement et de suspension verticale du siège de véhicule (1), le siège de véhicule (1) présentant une partie supérieure de siège de véhicule (3) et une partie inférieure de siège de véhicule (4), la partie supérieure de siège de véhicule (3) et la partie inférieure de siège de véhicule (4) étant reliées au moyen de l'unité de suspension (2), de telle sorte que la partie supérieure de siège de véhicule (3) et la partie inférieure de siège de véhicule (4) sont déplaçables l'une par rapport à l'autre, l'unité de suspension (2) présentant un ensemble ciseaux (5) avec une première branche de ciseaux (6) et une seconde branche de ciseaux (7),
dans lequel l'unité de suspension (2) est reliée à la partie inférieure de siège de véhicule (4) de manière à pouvoir tourner autour d'un premier axe de rotation (10) et comporte un premier élément ressort à fluide (12) et un second élément ressort à fluide,
dans lequel le premier élément ressort à fluide (12) et le second élément ressort à fluide sont reliés chacun à la partie inférieure de siège de véhicule (4) et à la partie supérieure de siège de véhicule (3),
dans lequel un fluide est apte à être pompé entre le premier élément ressort à fluide (12) et le second élément ressort à fluide (13) au moyen d'une unité de pompe (57), de telle sorte que la partie supérieure de siège de véhicule (3) est sensiblement dans une position horizontale.

11. Procédé d'amortissement des mouvements de roulement d'un siège de véhicule (1) selon l'une des revendications 1 à 10, comportant les étapes de procédé :
a) détection d'une déflexion du siège de véhicule (1) sur la partie inférieure de siège de véhicule (4) ;
b) détermination d'une quantité de fluide à pomper entre le premier élément ressort à fluide (12) et le second élément ressort à fluide (13), et pompage de cette quantité de fluide de telle sorte que la partie supérieure de siège de véhicule (3) est maintenue dans une position horizontale.

12. Procédé selon la revendication 11, dans lequel, en plus de la déflexion du siège de véhicule (1) sur la partie inférieure de siège de véhicule (4), une déflexion sur la partie supérieure de siège de véhicule (3) est détectée.
